# EUROPEAN PATENT APPLICATION

(11) **EP 0 756 891 A1**
(43) Date of publication of application: **05.02.1997**
(21) Application number: 96109578.3
(22) Date of filing: 14.06.1996
(51) Int. Cl.: B01D 53/86

(54) **Iron zeolite for conversion of NOx**

(30) Priority: 26.07.1995 US 506715
(71) Applicant: CORNING INCORPORATED, Corning, N.Y. 14831 (US)
(72) Inventor: Swaroop, Srinivas Hosdurg, Corning, NY 14831 (US); Wurisika, Raja Rao, Corning, NY 14831 (US)
(74) Representative: Reinhard - Skuhra - Weise & Partner

(57) **Abstract**

A method for converting NOₓ to innocuous products which involves providing an iron-ZSM-5 monolithic structure zeolite having a silica to alumina mole ratio of at least about 10/1, wherein the iron content is about 1% to 5% by weight, and contacting the zeolite with a NOₓ-containing workstream in the presence of ammonia at a temperature in the range of at least about 200°C.

## Description

This invention relates to a method of conversion of NOₓ over a wide temperature range using a single catalyst, Fe-zeolite.

### BACKGROUND OF THE INVENTION

Selective Catalytic Reduction (SCR) is widely accepted as the best after-treatment technology for reducing emissions of oxides of nitrogen, NOₓ, from stationary sources such as power plants, refineries, boilers, etc. In this process, NOₓ is reduced by injected ammonia in the presence of excess oxygen to nitrogen and water. One of the main attributes of any SCR catalyst is its operating window for NOₓ conversion, that is, the temperature range over which the conversion of NOₓ is at least about 80%. Based on this operating window, two types of SCR catalysts are known: (1) vanadia/titania catalysts and (2) zeolite catalysts.

The former represents the most widely used catalyst today, and its operating window is about 200-400°C. At temperatures greater than 400°C, these catalysts also begin to function as oxidation catalysts for ammonia, a process that not only depletes the amount of ammonia available for NOₓ reduction, but also results in the formation of NOₓ, and thus leads to lower overall NOₓ conversions. Zeolite catalysts on the other hand, are most effective for SCR in the temperature range of about 400-600°C or more. They are, therefore "high temperature" SCR catalysts, in contrast to vanadia/titania, which is a "low temperature" SCR catalyst.

The operating temperature range of either type of SCR catalyst poses limitations on the design of the emissions treatment process, as well as on its operation For instance, high temperature excursions cannot be tolerated for too long in an SCR unit with vanadia/titania catalyst without running out of compliance on NOₓ emissions.

U.S. patent 5,271,913 describes a conversion process for NOₓ using Fe-zeolite over temperature range of only 500-700°C.

Therefore, it would be very desirable to have a method for efficiently converting NOₓ over an operating window which includes the lower range of about 200 up to the higher ranges of 600°C or more using a single catalyst.

The present invention provides such a method and catalyst.

### SUMMARY OF THE INVENTION

In accordance with one aspect of the invention, there is provided a method for converting NOₓ to innocuous products which involves providing an iron-ZSM-5 monolithic structure zeolite having a silica to alumina mole ratio of at least about 10/1, wherein the iron content is about 1% to 5% by weight, and contacting the zeolite with a NOₓ-containing workstream in the presence of ammonia at a temperature in the range of at least about 200°C.

### BRIEF DESCRIPTION OF THE DRAWINGS

Figure 1 is a plot of percent NOₓ Conversion versus Temperature for a commercial catalyst and an unmodified ZSM-5 zeolite.

Figure 2 is a plot of percent NOₓ Conversion versus Temperature for an unmodified ZSM-5 zeolite, and an iron impregnated ZSM-5 honeycomb.

Figure 3 is a plot of percent NOₓ Conversion versus Temperature for a an unmodified ZSM-5 zeolite, and pre-extrusion iron-impregnated ZSM-5 zeolites.

Figure 4 s a plot of percent NOₓ Conversion versus Temperature for ZSM-5 zeolites impregnated with iron acetate as is, and prepared in-situ.

### DETAILED DESCRIPTION OF THE INVENTION

The present invention provides a method of converting NOₓ to innocuous products in the presence of ammonia over a wide temperature window from temperatures as low as about 200°C into the relatively high temperature ranges of 600°C and above.

By innocuous products is meant those that are generally considered to be harmless to health and the environment such as N₂, CO₂, and water.

The zeolite is a pentasil structure ZSM-5 (average pore diameter of about 5-6 angstroms) having a silica to alumina mole ratio of at least about 10/1 and preferably less than about 300/1 for high stability and activity at the higher temperature ranges. The zeolite is preferably synthetic as opposed to natural because of its greater thermal stability.

The zeolite is in the form of a monolithic structure as opposed to loose powder or a coating on a substrate, for higher strength and durability, lower attrition, and longer life. Some structures are tubes, or multicellular structures.

The preferred monolithic structure is a multicellular thin walled structure such as a honeycomb for high surface area of reaction.

Some examples of honeycombs which can be used in the practice of the present invention, although it is to be understood that the invention is not limited to these, are about 94 cells/cm² (600 cells/in²), about 62 cells/cm² (400 cells/in²), or about 47 cells/cm² (300 cells/in²), about 31 cells/cm² (200 cells/in²), or about 15 cells/cm² (100 cells/in²), about 3.8 cells/cm² (about 25 cells/in², or about 1.4 cells/cm²(9 cells/in²). Typical wall (web) thicknesses in catalytic conversion applications, for example, are about 6 mils (about 0.15 mm) for 400 cells/in² (62 cells/cm²) honeycombs. Web thicknesses range typically from about 4 to about 35 mils (about 0.1 to about 0.9 mm). The external size and shape of the body is controlled by the application.

The ZSM-5 zeolite has iron impregnated therein. This is done preferably by the incipient wetness technique of contacting the zeolite (preferably in the H⁺ or (NH₄)⁺ form, as opposed to the Na⁺ form for thermal stability) with a solution of the salt of iron. The volume of the solution is adjusted such that the solution essentially completely is soaked into the zeolite. The amount of iron to be impregnated into the zeolite can be controlled primarily by the concentration of iron in solution. This technique is preferred over the ion exchange technique, because it gives greater flexibility in controlling the amount of iron that can be incorporated into the zeolite.

The zeolite can be impregnated with the iron either before or after forming into a monolithic structure. It is preferable to impregnate the iron into the zeolite prior to forming the monolithic structure.

In such pre-forming impregnation, the zeolite can be contacted with iron solution either in loose or powder form, or during the mixing of the forming batch. It is preferred that the zeolite be in the powder form for impregnation.

The iron content of the zeolite as measured based on the metal Fe, is at least about 1% by weight to function properly. However, the iron content is not to exceed about 5% by weight based on the iron-zeolite because levels of iron greater than about 5% favor oxidation of the ammonia at the expense of the SCR reaction. The preferred level of iron is about 1.5% to about 3% by weight.

Shaping of the zeolite into the monolith is done by techniques known in the art, and is preferably by extrusion.

One preferred method of shaping the zeolite is to form a plastic mixture of the iron-zeolite and binders such as silicone resin, which is a precursor of SiO₂ binder, dissolved in a solvent such as alcohols as isopropyl alcohol, or dibasic ester, such as dimethyl succinate, dimethyl adipate, and/or dimethyl glutarate, and temporary binders such as methylcellulose and/or its derivatives, and optionally co-binders such as polyvinyl alcohol or polyvinyl acetate, shape the mixture as by extrusion, followed by drying and heat-treating. Such methods are described in U.S. patent application SN 08/304,157, filed September 12, 1994, and U.S. patent 4,631,267 which are herein incorporated by reference as filed. For example one way of making the iron zeolite structure is to form a mixture of about 65% to 95% iron zeolite, and about 5% to 35% silicone resin with super additions (i.e., based on the zeolite and silicone resin) of about 1% to 10%, and preferably about 3% to 6% organic binder, e.g. methylcellulose and/or hydroxypropyl methylcellulose, preferably about 1 to 2% co-binder, e.g., polyvinyl alcohol. Preferably the silicone resin is dissolved in sufficient dibasic ester solvent to solubilize the entire charge of silicone resin. This is usually about 20 weight parts of silicone resin in about 15 weight parts of dibasic ester although this can vary. The mixture is shaped into a green body such as by extrusion, preferably into a honeycomb. The green body is dried by methods known in the art to remove the liquid phases. The dried body is then heat-treated to develop strength, such as at temperatures of about 400°C to 1000°C.

The iron salt can be any water soluble salt such as ferric nitrate, iron acetate, ferrous ammonium sulfate, ferric ammonium citrate, or combinations of these. Ferric nitrate is preferred because its decomposition products are non-contaminating.

The iron zeolite is contacted with a fluid workstream containing NOₓ contaminants to which ammonia is injected so that the mole ratio of NH₃/NOₓ in the workstream is about 0.8/1 to 1.2/1, to convert at least about 80 wt.% of the NOₓ in the workstream to innocuous products, namely, N₂ and H₂O. The temperature range of contact is relatively broad. It can be as low as about 200°C, or it can be as high as the upper range of reaction, that is about 650°C or higher. Only one contact stage is employed. By using the iron zeolite according to the present invention, only one catalyst is utilized over the temperature range of about 200-600°C.

As will be seen in the examples that follow, in the temperature range of about 250°C to about 600°C, there is at least about 80 wt.% conversion, and in a temperature range of about 300°C to 600°C, there is at least about 90 wt.% conversion of the NOₓ.

The method of the present invention is especially advantageous in applications which utilize the SCR reactions, such as in conversion of NOₓ from stationary sources as power plants, refineries, boilers, etc. In such applications, the temperatures can vary widely. The iron zeolite can be used to convert NOₓ in a single stage over a wide temperature range. Thus it replaces the commonly used low temperature vanadia/titania catalyst which at high temperatures functions as an oxidation catalyst for ammonia to produce additional NOₓ. Furthermore, vanadia/titania catalysts rapidly lose their activity by sintering upon exposure to gases at high temperatures. Once they lose their activity in this manner, they will not regain it again even if the temperature of contact is lowered to <400°C. In contrast, the iron-zeolite of this invention functions efficiently with waste feed gases at temperatures in the range of about 200-400°C without requiring additional heating to become active. For instance, unmodified zeolites such as H-ZSM-5 cannot efficiently convert NOₓ in a feed gas at temperatures below about 350-400°C. Such low temperature gas streams have to be heated to be treated effectively, i.e. to achieve 80% NOₓ conversion by H-ZSM-5 catalysts. The versatility of the Fe-zeolite catalyst of the present invention is that it allows the use of only one type of catalyst to operate at low temperatures, high temperatures, or over the entire range of low and high temperatures. As a result of the wide temperature range of stability and activity, there is also greater flexibility in positioning the zeolite in a conversion operation. That is, the Fe-zeolite catalyst of the present invention can be positioned at the cooler or hotter end of the NOₓ-containing workstream/process, thereby offering a significant advantage in the design of NOₓ treatment processes.

To more fully illustrate the invention, the following non-limiting examples are presented. All parts, portions, and percentages are on a weight basis unless otherwise stated.

### EXAMPLE 1

Four types of honeycombs are prepared by extrusion, and evaluated for SCR catalytic activity:
(1) about 90% of a ZSM-5 zeolite + 10% SiO₂ binder
(2) Honeycomb of (1) above impregnated with ferrous ammonium sulfate solution to give about 2% iron in the zeolite.
(3) ZSM-5 zeolite impregnated with various iron salt solutions and calcined to give about 2% iron in the zeolite (Fe-ZSM-5), after which the zeolites as mixtures of about 90% Fe-zeolite and about 10% SiO₂ binder are extruded.
(4) Ferric ammonium citrate dissolved in deionized water and added to the zeolite extrusion batch during mulling/mixing. This batch is extruded according to known procedures.

In each case, the extrusion of honeycombs is carried out using a methylcellulose extrusion binder and a silicone resin as a precursor to the silica binder (which binds the zeolite particles together in the honeycomb structure). The silicone resin is predissolved In a dibasic ester solvent, and the solution is added to the batch during mix/mulling. In all cases, the zeolite used is a synthetic hydrogen form of ZSM-5 zeolite (H-ZSM-5) with a SiO₂:Al₂O₃ mole ratio of about 55:1.

The zeolite (1), having about 3.8 cells/cm² (about 25 cells/in² is extruded using the composition given below. It is calcined at about 850°C for about 3 hours in an electric furnace.

| Material | Weight (grams) |
|---|---|
| H-ZSM-5 zeolite | 540.0 |
| Dow-Corning Q6-2230 silicone resin | 130.0 |
| Dow Type 240 Methocel® | 36.0 |
| Dupont Dibasic Ester DBE | 100.0 ml |
| Deionized water | Approx. 250.0 |

The zeolite (2) is obtained by impregnating the calcined zeolite of (1) with ferrous ammonium sulfate solution. The volume of the iron salt solution is adjusted to be just enough to completely immerse the 2.54 cm (1") diameter x 2.54 cm (1") long honeycomb sample. (This technique is commonly known as the "incipient wetness" technique.) The concentration of the iron in solution is calculated so that, assuming complete impregnation, the zeolite in the honeycomb would contain about 2% iron as the metal on calcination. The impregnated sample is calcined at about 550°C for about 3 hours.

In the case of zeolites (3), Table 1 shows the extrusion batches and the iron compound used to prepare the Fe-ZSM-5 used in that extrusion.

**Table 1**

| No. | Description |
|---|---|
| (3)-1 | H-ZSM-5 zeolite impregnated with iron acetate, calcined at about 550oC and extruded into honeycombs |
| (3)-2 | Iron added as ferrous ammonium sulfate to H-ZSM-5 zeolite calcined at 850° C and extruded into honeycombs (Note: when calcined lower than 850° C, the sample could not be extruded) |
| (3)-3 | 2% elemental iron powder was dry mixed with H-ZSM-5 zeolite. A solution of acetic acid in water was added to the mix, dried and fired at 550°C and extruded into honeycombs. |
| (3)-4 | H-ZSM-5 zeolite impregnated with ferric nitrate solution, calcined at about 500°C and extruded into honeycombs |

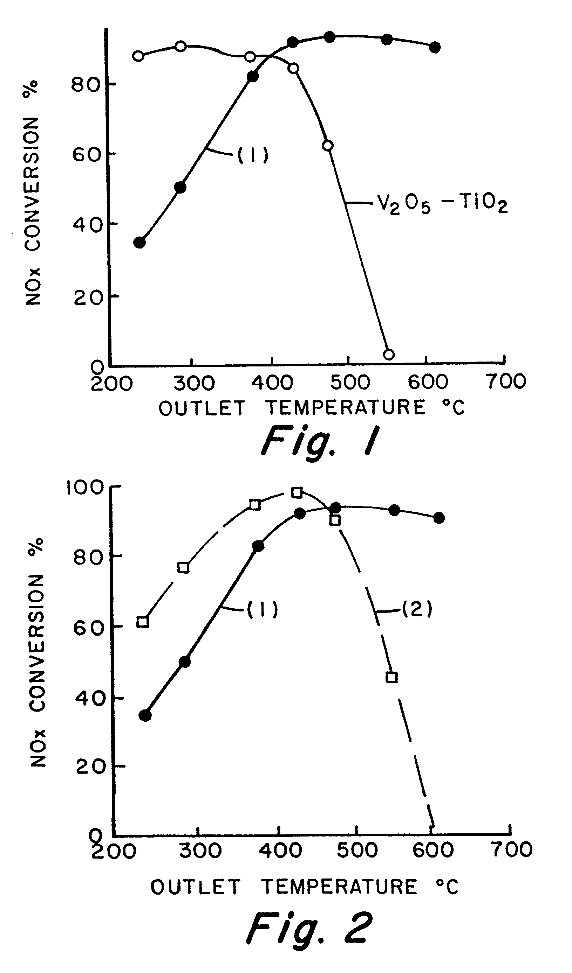

Honeycombs of the various catalysts measuring about 2.54 cm x 2.54 cm (1" x 1") are tested for SCR activity using a bench test reactor at a space velocity of about 5800h⁻¹ based on the total catalyst volume. The NOₓ conversion in a feed gas stream containing by volume about 500 ppm NH₃, about 500 ppm NO, about 5% O₂, and balance N₂ was measured at various temperatures ranging between about 200°C and about 600°C For purposes of comparison, a 2.54 cm x 2.54 cm (1" x 1") honeycomb commercial V₂O₅/TiO₂ catalyst of approximately the same cell structure as all the zeolite extruded catalysts are also tested for SCR activity. The results are summarized in Figures 1 through 4.

Figure 1 summarizes the problem addressed by this invention by depicting the SCR operating windows of the unmodified zeolite (H-ZSM-5) (1), and the commercial V₂O₅/TiO₂ catalyst. The latter catalyst has a relatively low temperature window of about 250°C-450°C. The activity window of the unmodified zeolite is about 400°C-600°C.

Figure 2 shows the effect of iron impregnation of the extruded honeycomb (2) on SCR activity. Although there is some improvement in low temperature activity, honeycomb (2) has poor high temperature activity and overall, is inferior to the unmodified zeolite catalyst (1). Without wishing to be bound by theory, we believe that efficiency of conversion of honeycomb (2) can be improved by improved mixing of the extrusion batch to ensure impregnation of iron into the zeolite.

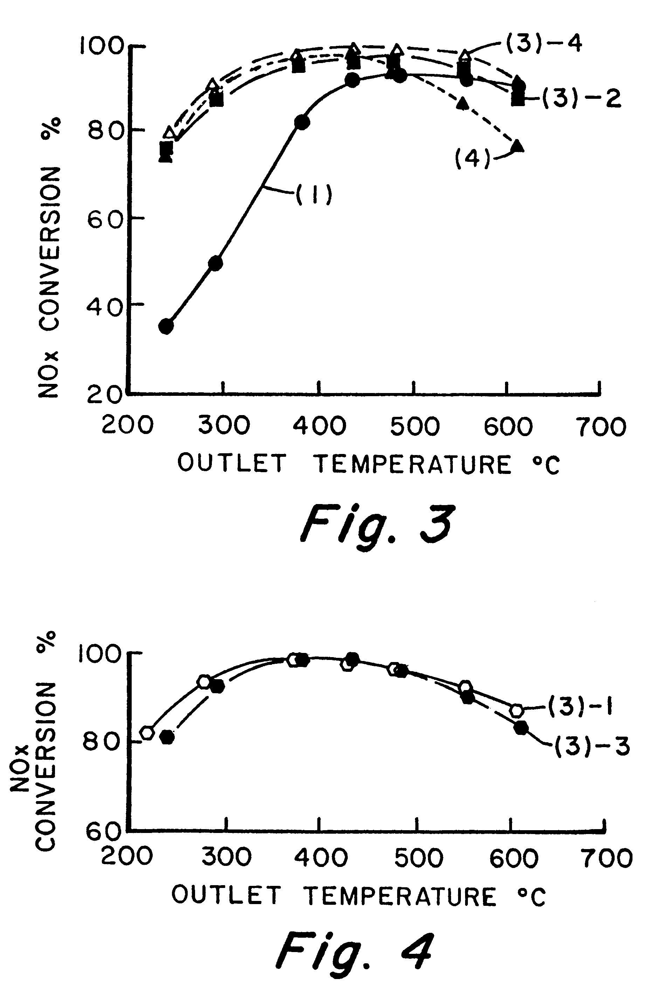

Figure 3 shows the effect of impregnation of the ZSM-5 zeolite prior to extrusion. Relative to the unmodified zeolite (1), all the iron-impregnated catalysts (3)-2, (3)-4, and (4) have superior low temperature activity. Among the iron zeolite catalysts, however, the (3)-2 composition (derived from ferrous ammonium sulfate impregnated zeolite) is a less desirable route because of the need to calcine this Fe-zeolite to higher temperatures prior to extrusion, and of some of the difficulties in extruding this catalyst. The (4) catalyst appeared relatively inhomogeneous in terms of the dispersion of iron (based on the color of the extruded honeycomb). This might be indicative of poor impregnation and dispersion of the iron in the zeolite when the iron salt (ferric ammonium citrate) is added to the batch during mixing. This catalyst has poorer high temperature activity, although the low temperature activity is superior to that of the unmodified zeolite. It may be possible to improve the performance of the (4) catalyst by optimizing the mixing process.

In Figure 4, the effect of impregnation with iron acetate (prepared separately as in (3)-1 or prepared in situ as in (3)-3 is shown. These catalysts have a very wide SCR window from about 200°C-250°C to over about 600°C, similar to the (3)-4 catalyst. Comparing the results in Figures 3 and 4 with those in Figure 1, it is clear that pre-extrusion impregnation of the ZSM-5 zeolite with about 2% iron using iron nitrate or iron acetate precursors added to the zeolite prior to extrusion leads to an SCR honeycomb catalyst with a very wide window of operation.

## Claims

1. A method for converting NOₓ to innocuous products, the method comprising providing an iron-ZSM-5 monolithic structure zeolite having a silica to alumina mole ratio of at least about 10/1, wherein the iron content is about 1% to 5% by weight, and contacting said zeolite with a NOₓ-containing workstream in the presence of ammonia at a temperature in the range of at least about 200°C.

2. A method of claim 1 wherein the temperature is about 250°C to 600°C and at least about 80% by weight of the NOₓ is converted to innocuous products.

3. A method of claim 2 wherein the temperature is about 300°C to 600°C and at least about 90% by weight of the NOₓ is converted to innocuous products.

4. A method of claim 1 wherein the iron content in the zeolite is about 1.5% to 3%.

5. A method of claim 1 wherein the monolithic structure is provided as a honeycomb.

6. A method of claim 1 wherein the iron-ZSM-5 zeolite is provided by impregnation of zeolite powder with an iron compound, and thereafter shaping the zeolite into a monolithic structure.

7. A method of claim 1 wherein the Fe-ZSM-5 zeolite monolith is provided by first impregnating ZSM-5 zeolite powder with a solution of an iron salt selected from the group consisting of ferric nitrate, iron acetate, ferrous ammonium sulfate, ferric ammonium citrate, and combinations thereof in an amount sufficient to result in an iron content in the Fe-ZSM-5 zeolite of about 1.5% to 3%, calcining the Fe-ZSM-5 zeolite powder, and thereafter forming a mixture of the Fe-zeolite powder, temporary binder, and silicone resin binder, extruding the mixture into a honeycomb, drying the honeycomb, and calcining the honeycomb to form the Fe-ZSM-5 monolith structure.
